# DEMANDE DE BREVET EUROPEEN

(11) **EP 1 003 260 A1**
(43) Date de publication de la demande: **24.05.2000**
(21) Numéro de dépôt: 99402805.8
(22) Date de dépôt: 10.11.1999
(51) Int. Cl.: H02G 3/12

(54) **Boîte d'encastrement à plis en accordéon, notamment pour appareillage électrique et son procédé de fabrication**

(30) Priorité: 19.11.1998 FR 9814527
(71) Demandeur: LEGRAND, F-87000 Limoges (FR); LEGRAND SNC, F-87000 Limoges (FR)
(72) Inventeur: Favalessa, Thierry, 87240 Ambazac (FR)
(74) Mandataire: CABINET BONNET-THIRION

(57) **Abrégé**

Il s'agit d'une boîte d'encastrement comportant un corps (11), de contour circulaire, et une bague (13) montée rotative dans ce corps (11).

Suivant l'invention, la paroi latérale (14) du corps (11) forme au moins un pli (17), du type pli en accordéon, et, conjointement, la bague (13), qui est montée mobile axialement dans le corps (11), comporte au moins un cran (23) par lequel elle est apte à se crocheter intérieurement sur un tel pli (17).

Application, notamment, aux boîtes d'encastrement pour appareillages électriques.

## Description

La présente invention concerne d'une manière générale les boîtes d'encastrement du type de celles mises en oeuvre pour le logement d'un quelconque appareillage, et, par exemple, d'un quelconque appareillage électrique, au sein même d'une quelconque paroi, dûment excavée à cet effet.

Elle vise plus particulièrement le cas où une telle boîte d'encastrement comporte un corps de contour globalement circulaire, et, montée rotative dans ce corps, au débouché de celui-ci, une bague propre à permettre d'assujettir à l'ensemble l'appareillage à encastrer.

Des boîtes d'encastrement de ce genre se trouvent notamment décrites dans le brevet français No 1 515 254 et dans le brevet français qui, enregistré sous le No 73 24170, a été publié sous le No 2 237 331.

La bague qu'elles comportent permet avantageusement un éventuel rattrapage d'aplomb pour l'appareillage concerné, en autorisant par rotation une mise à l'horizontale de celui-ci si nécessaire.

Lors de la mise en oeuvre de ces boîtes d'encastrement, il importe, bien entendu, que leur hauteur soit compatible avec l'épaisseur de la paroi à équiper.

Il est donc à ce jour systématiquement mis à la disposition des installateurs toute une gamme de boîtes d'encastrement de hauteurs différentes, parmi lesquelles ils doivent choisir celle qui convient.

Il en résulte une dispendieuse multiplication des fabrications, au détriment des coûts.

La présente invention a d'une manière générale pour objet une disposition permettant de minimiser ces coûts et conduisant en outre à d'autres avantages.

De manière plus précise, elle a tout d'abord pour objet une boîte d'encastrement du genre comportant un corps de contour globalement circulaire, et, montée rotative dans ce corps, au débouché de celui-ci, une bague propre à permettre d'assujettir à l'ensemble un quelconque appareillage à encastrer, cette boîte d'encastrement étant d'une manière générale caractérisée en ce que la paroi latérale du corps forme annulairement au moins un pli, qui s'étend axialement entre deux bords intérieurs susceptibles d'être déplacés l'un par rapport à l'autre, et en ce que, conjointement, la bague est montée mobile axialement dans ce corps, en présentant une garde pour son appui sur celui-ci, et elle comporte, au moins localement, en saillie vers l'extérieur sur sa paroi latérale, au moins un cran, qui s'étend transversalement sur une partie au moins de son pourtour, et par lequel elle est apte à se crocheter intérieurement sur le corps ; elle a encore pour objet un procédé de fabrication propre à la réalisation d'une telle boîte d'encastrement.

Grâce à une telle bague, dont il est ainsi avantageusement tiré un parti supplémentaire, il est possible, à la demande, d'ajuster en hauteur la boîte d'encastrement suivant l'invention, dans les limites d'une gamme de hauteurs appréciable.

Il suffit, pour ce faire, d'enfoncer plus ou moins axialement cette bague dans le corps avec lequel elle est en prise.

Préférentiellement, le pli que forme la paroi latérale du corps de la boîte d'encastrement suivant l'invention a, au repos, une configuration déployée, et les bords intérieurs qui le délimitent sont susceptibles d'être rapprochés l'un de l'autre, ce qui, sous l'action de la bague associée, lui permet de prendre une configuration rétractée pour laquelle il est plus ou moins comprimé.

Préférentiellement, également, la paroi latérale du corps de la boîte d'encastrement suivant l'invention forme une pluralité de plis échelonnés axialement sur sa hauteur, et la bague associée est apte à se crocheter par son cran sur l'un des bords intérieurs de l'un quelconque de ces plis.

La bague de la boîte d'encastrement suivant l'invention est alors mobile entre une position déployée, de hauteur maximale, pour laquelle, en prise par son cran avec celui des bords intérieurs du premier pli du corps dont sa garde est le plus proche, elle ajoute sa propre hauteur à celle du corps, sans qu'un quelconque des plis de celui-ci soit comprimé, à une position rétractée, de hauteur minimale, pour laquelle, au contraire, elle est en prise, par son cran, avec le bord intérieur du dernier pli du corps dont sa garde est le plus éloigné, en maintenant ainsi comprimé l'ensemble des plis de ce corps.

Quoi qu'il en soit, grâce à la capacité d'ajustement en hauteur que présente la boîte d'encastrement suivant l'invention, le nombre de boîtes d'encastrement de hauteurs différentes à fabriquer se trouve avantageusement réduit.

En outre, grâce à cette capacité d'ajustement en hauteur, les installateurs bénéficient avantageusement d'une plus grande souplesse de mise en oeuvre pour ces boîtes d'encastrement, en pouvant ajuster en hauteur chacune d'elles chaque fois que cela s'avère nécessaire.

Suivant, par ailleurs, le procédé de fabrication suivant l'invention, on intervient, préférentiellement, par soufflage, en faisant venir de la même paraison le corps et la bague d'une telle boîte d'encastrement.

Ainsi, au lieu des deux moules qui seraient normalement nécessaires pour une fabrication traditionnelle par injection ou compression, un même moule suffit suivant l'invention à la fabrication de ce corps et de cette bague, au bénéfice des coûts.

Les objets de l'invention, et les caractéristiques et avantages de ceux-ci, ressortiront d'ailleurs de la description qui va suivre, à titre d'exemple, en référence aux dessins schématiques annexés sur lesquels :
la figure 1 est une vue en perspective d'une boîte d'encastrement suivant l'invention ;
la figure 2 en est une vue en perspective éclatée ;
la figure 3 est une vue de côté du corps de cette boîte d'encastrement, suivant la flèche III de la figure 2 ;
la figure 4 est, à échelle supérieure, une vue partielle en coupe axiale de ce corps, suivant la ligne IV-IV de la figure 2 ;
la figure 5 est, suivant la flèche V de la figure 2, une vue de côté de la bague associée à ce corps, avant la mise en place de vis sur celle-ci ;
les figures 6 et 7 sont, à échelle supérieure, des vues partielles en coupe axiale de cette bague, suivant, chacune respectivement, les lignes VI-VI et VII-VII de la figure 5 ;
la figure 8 est, à échelle différente, une vue partielle en coupe axiale de l'ensemble de la boîte d'encastrement suivant l'invention, suivant la ligne VIII-VIII de la figure 1 ;
les figures 9A et 9B sont des vues partielles en coupe axiale qui, analogues à celle de la figure 8, illustrent la capacité d'ajustement en hauteur de la boîte d'encastrement suivant l'invention, en correspondant chacune respectivement à la hauteur maximale et à la hauteur minimale pour celle-ci ;
la figure 10 est une vue de côté de la paraison unique dont peuvent être issus conjointement, si désiré, le corps et la bague de la boîte d'encastrement suivant l'invention.

Tel qu'illustré sur ces figures, et de manière connue en soi, la boîte d'encastrement 10 suivant l'invention comporte, globalement, d'une part, un corps 11, de contour globalement circulaire, et, d'autre part, montée rotative dans ce corps 11, au débouché 12 de celui-ci, une bague 13, qui, suivant des dispositions décrites plus en détail ultérieurement, est propre à permettre d'assujettir à l'ensemble un quelconque appareillage, non représenté, à encastrer.

De manière connue en soi, également, le corps 11 de cette boîte d'encastrement 10 comporte une paroi latérale 14, qui est globalement cylindrique, et un fond 16.

Une telle boîte d'encastrement 10 étant bien connue par elle-même, elle ne sera pas décrite plus en détail ici.

Seuls seront décrits dans ce qui suit les éléments de l'invention nécessaires à la compréhension de celle-ci.

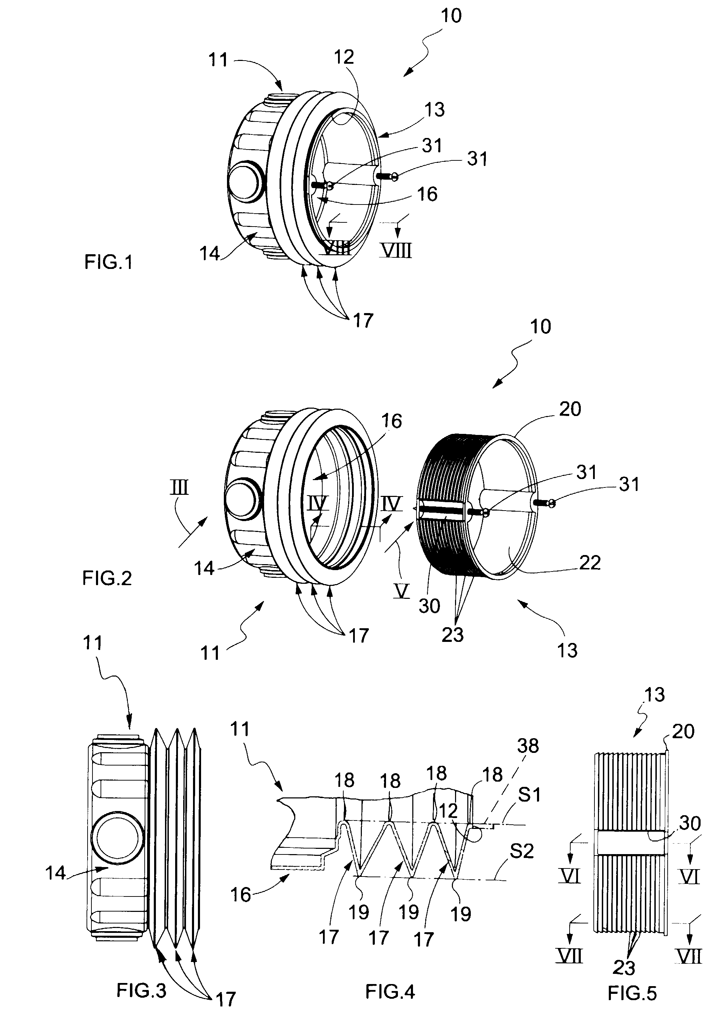

Suivant l'invention, la paroi latérale 14 du corps 11 forme, annulairement, suivant des dispositions décrites plus en détail ultérieurement, au moins un pli 17, qui s'étend, axialement, et ainsi qu'il est mieux visible sur la figure 4, entre deux bords intérieurs 18 susceptibles d'être déplacés l'un par rapport à l'autre, avec, dans l'intervalle, un bord extérieur 19 de diamètre supérieur, et, conjointement, la bague 13 est montée mobile axialement dans ce corps 11, en présentant une garde 20 pour son appui sur celui-ci, et elle comporte, au moins localement, en saillie vers l'extérieur sur sa paroi latérale 22, au moins un cran 23, qui s'étend transversalement sur une partie au moins de son pourtour, et par lequel, suivant des dispositions également décrites plus en détail ultérieurement, elle est apte à se crocheter intérieurement sur le corps 11.

Dans la forme de réalisation représentée, la paroi latérale 14 du corps 11 forme une pluralité de plis 17 échelonnés axialement sur sa hauteur.

Par exemple, et tel que représenté, ces plis 17 sont jointifs, à la manière des plis d'un accordéon.

Le ou les plis 17 intermédiaires entre les plis 17 d'extrémité ont donc leurs bords intérieurs 18 en commun avec les plis 17 qui les encadrent.

Dans la forme de réalisation représentée, la paroi latérale 14 du corps 1 1 est ainsi plissée en accordéon à compter du débouché 12 de celui-ci.

En pratique, dans la forme de réalisation représentée, le nombre de plis 17 est, à titre d'exemple, égal à trois.

Mais ce nombre ne doit en rien être considéré comme limitatif de l'invention.

En outre, dans cette forme de réalisation, ces plis 17 sont tous identiques entre eux.

Plus précisément, leurs bords intérieurs 18 sont tangents à une surface cylindrique S1 qui est la même pour tous, et, de même, leur bord extérieur 19 s'étend suivant une surface cylindrique S2, qui est aussi la même pour tous, et dont le diamètre est supérieur à celui de la surface cylindrique S1 précédente.

Par exemple, et tel que représenté, la surface cylindrique S1 s'étend largement en deçà de la partie courante de la paroi latérale 14, et la surface cylindrique S2 légèrement au-delà de celle-ci.

Corollairement, les plis 17 ont, tous, axialement, un même profil.

Par exemple, et tel que représenté, ce profil est un profil symétrique en V.

Les bords intérieurs 18 des plis 17 sont donc chacun formés par une arête, et il en est de même pour leur bord extérieur 19.

Il va de soi, cependant, que ces bords intérieurs 18 et/ou ce bord extérieur 19 pourraient résulter de coudes plus ou moins arrondis.

Préférentiellement, et cela est le cas dans la forme de réalisation représentée, les plis 17 que forme ainsi la paroi latérale 14 du corps 11 ont, au repos, une configuration déployée, et les bords intérieurs 18 qui les délimitent sont susceptibles d'être rapprochés l'un de l'autre comme il apparaîtra ci-après.

Quoi qu'il en soit, dans la forme de réalisation représentée, les plis 17 du corps 11 affectent à pleine épaisseur la paroi latérale 14 de celui-ci.

Préférentiellement, également, et cela est aussi le cas dans la forme de réalisation représentée, la bague 13 est apte à se crocheter par son cran 23 sur l'un quelconque des plis 17, et, plus précisément, sur l'un des bords intérieurs 18 d'un tel pli 17.

Dans la forme de réalisation représentée, la bague 13 comporte une pluralité de crans 23 échelonnés sur la hauteur de sa paroi latérale 22.

Par exemple, et tel que représenté, ces crans 23 sont jointifs, à la manière des dents d'une crémaillère.

En outre, dans la forme de réalisation représentée, ces crans 23 sont tous identiques entre eux.

En pratique, dans cette forme de réalisation, ces crans 23 ont, axialement, un profil dissymétrique, leur front 25 le plus proche de la garde 20 étant plus raide que leur front 26 le plus éloigné de celle-ci.

Par exemple, et tel que représenté, leur front 25 s'étend sensiblement perpendiculairement à l'axe de l'ensemble.

En outre, dans la forme de réalisation représentée, la crête 27 de ces crans 23 est tangente à une surface cylindrique S'1 qui est la même pour tous, et, de même, leur racine 28 s'étend sensiblement suivant une surface cylindrique S"1 qui est également la même pour tous.

En pratique, le diamètre de la surface cylindrique S'1 est légèrement supérieur à celui de la surface cylindrique S1 suivant laquelle s'étendent les bords intérieurs 18 des plis 17 du corps 11, et, conjointement, le diamètre de la surface cylindrique S"1 est inférieur à celui de cette surface cylindrique S1.

Préférentiellement, et cela est le cas dans la forme de réalisation représentée, les crans 23 de la bague 13 s'étendent annulairement autour de sa paroi latérale 22, sur la quasi totalité du pourtour de celle-ci.

Cependant, dans la forme de réalisation représentée, la bague 13 comporte, en creux sur sa paroi latérale 22, et en positions diamétralement opposées l'une par rapport à l'autre, deux rainures 30, qui sont allongées suivant des génératrices de sa paroi latérale 22, en interrompant localement ses crans 23, et à la faveur de chacune desquelles intervient une vis 31 propre à l'assujettissement de l'appareillage à encastrer.

Dans la forme de réalisation représentée, ces rainures 30 sont fermées, à chacune de leurs extrémités, par des parois transversales 32 dans chacune desquelles mord la vis 31 correspondante.

Si désiré, d'autres parois transversales, non représentées, peuvent être prévues entre les extrémités des rainures 30, pour améliorer la tenue de cette vis 31.

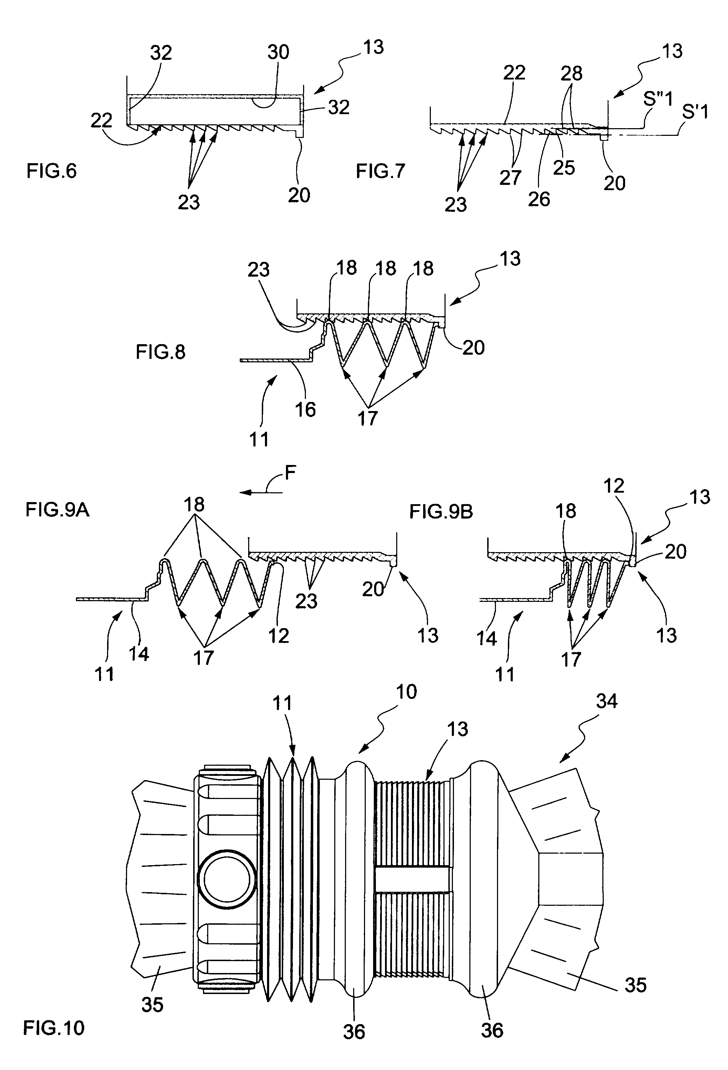

Pour la position de hauteur maximale représentée sur la figure 9A, qui correspond à l'une de ses positions extrêmes, la bague 13 est en prise, par l'un de ses crans 23, avec celui des bords intérieurs 18 du premier pli 17 du corps 11 qui est le plus proche de sa garde 20, sans interférer avec l'autre bord intérieur 18 de ce premier pli 17, et a fortiori, sans interférer avec les bords intérieurs 18 des autres plis 17 du corps 11.

Les plis 17 du corps 11 ont alors chacun leur configuration déployée d'origine, pour laquelle leurs bords intérieurs 18 sont axialement écartés l'un de l'autre.

Pour la position de hauteur minimale représentée sur la figure 9B, qui correspond à l'autre de ses positions extrêmes, la bague 13 est en prise, par l'un de ses crans 23, avec celui des bords intérieurs 18 du dernier pli 17 du corps 11 qui est le plus éloigné de sa garde 20, et tous les plis 17 du corps 11 sont comprimés, ces plis 17 ayant alors chacun une configuration rétractée pour laquelle leurs bords intérieurs 18 sont axialement rapprochés l'un de l'autre.

Prenant appui par sa garde 20 sur le débouché 12 du corps 11, la bague 13 maintient ainsi en configuration rétractée l'ensemble des plis 17 de ce corps 11.

Ainsi qu'il est aisé de le comprendre, la bague 13 peut, pas à pas, c'est-à-dire dent par dent, occuper de manière stable, toutes les positions intermédiaires souhaitables entre ses positions extrêmes.

Il suffit que, pour ce faire, elle soit plus ou moins enfoncée axialement dans le corps 11, tel que schématisé par la flèche F sur la figure 9A.

Les plis 17 du corps 11 sont alors plus ou moins comprimés, certains pouvant même rester en configuration déployée cependant que d'autres sont déjà en configuration rétractée.

Pour la fabrication de la boîte d'encastrement 10 suivant l'invention, on peut, par exemple, mettre en oeuvre un procédé consistant à intervenir par soufflage, en faisant venir le corps 11 de cette boîte d'encastrement 10 et sa bague 13 de la même paraison 34, tel que représenté sur la figure 10.

Bien entendu, outre les carottes de moulage 35 présentes à ses extrémités, cette paraison 34 comporte des portions de liaison 36 qu'il s'agit d'éliminer.

Par exemple, il y a ainsi une portion de liaison 36 entre le corps 11 et la bague 13, et il y en a une autre entre cette bague 13 et la carotte de moulage 35 correspondante.

Préférentiellement, et suivant des modalités qui, relevant de l'homme de l'art, ne seront pas décrites ici, le corps 11 de la boîte d'encastrement 10 et la bague 13 de celle-ci sont séparés de la paraison 34 qui leur est commune avant même le démoulage de celle-ci.

Suivant la variante de réalisation schématisée en traits interrompus sur la figure 4, au lieu d'intervenir immédiatement à compter du débouché 12 du corps 11, les plis 17 que comporte celui-ci interviennent à distance de ce débouché 12.

Autrement dit, à son débouché 12, le corps 11 comporte annulairement une collerette cylindrique 38, dont la hauteur axiale peut être plus ou moins importante.

Bien entendu la présente invention n'est pas limitée à la forme de réalisation représentée, ni au procédé de fabrication exposé, mais s'étend à toute variante d'exécution.

En particulier, si, dans la forme de réalisation plus particulièrement décrite et représentée, les plis prévus suivant l'invention sont tous identiques entre eux, ces plis pourraient tout aussi bien être différents les uns par rapport aux autres, notamment pour l'obtention d'une contrainte de compression variable pour la paroi comportant ces plis.

De même, au lieu d'être tous identiques entre eux, les crans de la bague associée pourraient tout aussi bien être différents les uns par rapport aux autres.

En outre, si le moulage des plis prévus suivant l'invention se fait naturellement plus aisément pour une configuration plus ou moins déployée de ces plis, tel que plus particulièrement décrit et représenté, on ne sortirait pas du cadre de l'invention en procédant à ce moulage pour une configuration plus rétractée de ces plis, voire pour une configuration entièrement rétractée de ceux-ci.

## Revendications

1. Boîte d'encastrement du genre comportant un corps (11) de contour globalement circulaire, et, montée rotative dans ce corps (11), au débouché (12) de celui-ci, une bague (13) propre à permettre d'assujettir à l'ensemble un quelconque appareillage à encastrer, caractérisée en ce que la paroi latérale (14) du corps (11) forme annulairement au moins un pli (17), qui s'étend axialement entre deux bords intérieurs (18) susceptibles d'être déplacés l'un par rapport à l'autre, et en ce que, conjointement, la bague (13) est montée mobile axialement dans ce corps (11), en présentant une garde (20) pour son appui sur celui-ci, et elle comporte, au moins localement, en saillie vers l'extérieur sur sa paroi latérale (22), au moins un cran (23), qui s'étend transversalement sur une partie au moins de son pourtour, et par lequel elle est apte à se crocheter intérieurement sur le corps (11).

2. Boîte d'encastrement suivant la revendication 1, caractérisée en ce que la bague (13) est apte à se crocheter par son cran (23) sur le pli (17) du corps (11).

3. Boîte d'encastrement suivant la revendication 2, caractérisée en ce que la bague (13) est apte à se crocheter par son cran (23) sur l'un des bords intérieurs (18) du pli (17) du corps (11).

4. Boîte d'encastrement suivant l'une quelconque des revendications 1 à 3, caractérisée en ce que le pli (17) du corps (11) a, au repos, une configuration déployée, et les bords intérieurs (18) qui le délimitent sont susceptibles d'être rapprochés l'un de l'autre.

5. Boîte d'encastrement suivant l'une quelconque des revendications 1 à 4, caractérisée en ce que le pli (17) du corps (11) a axialement un profil symétrique en V.

6. Boîte d'encastrement suivant l'une quelconque des revendications 1 à 5, caractérisée en ce que la paroi latérale (14) du corps (11) forme une pluralité de plis (17) échelonnés axialement sur sa hauteur.

7. Boîte d'encastrement suivant la revendication 6, caractérisée en ce que les plis (17) du corps (11) sont jointifs, à la manière des plis d'un accordéon.

8. Boîte d'encastrement suivant la revendication 7, caractérisée en ce que la paroi latérale (14) du corps (11) est plissée en accordéon à compter du débouché (12) de celui-ci.

9. Boîte d'encastrement suivant l'une quelconque des revendications 1 à 8, caractérisée en ce que le cran (23) de la bague (13) a axialement un profil dissymétrique, son front (25) le plus proche de la garde (20) étant plus raide que son front (26) le plus éloigné de celle-ci.

10. Boîte d'encastrement suivant l'une quelconque des revendications 1 à 9, caractérisée en ce que le cran (23) de la bague (13) s'étend annulairement autour de sa paroi latérale (22).

11. Boîte d'encastrement suivant l'une quelconque des revendications 1 à 10, caractérisée en ce que la bague (13) comporte une pluralité de crans (23) échelonnés sur la hauteur de sa paroi latérale (22).

12. Boîte d'encastrement suivant la revendication 11, caractérisée en ce que les crans (23) de la bague (13) sont jointifs, à la manière des dents d'une crémaillère.

13. Boîte d'encastrement suivant l'une quelconque des revendications 1 à 12, caractérisée en ce que la bague (13) comporte, en creux sur sa paroi latérale (22), et en positions diamétralement opposées l'une par rapport à l'autre, deux rainures (30), qui sont allongées suivant des génératrices de sa paroi latérale (22), et à la faveur de chacune desquelles intervient une vis (31) propre à l'assujettissement de l'appareillage à encastrer.

14. Procédé pour la fabrication d'une boîte d'encastrement (10) conforme à l'une quelconque des revendications 1 à 13, caractérisé en ce qu'il consiste à intervenir par soufflage, en faisant venir le corps (11) de cette boîte d'encastrement (10) et sa bague (13) de la même paraison (34).

15. Procédé suivant la revendication 14, caractérisé en ce que le corps (11) de la boîte d'encastrement (10) et la bague (13) de celle-ci sont séparés de la paraison (34) qui leur est commune avant même le démoulage de celle-ci.
